# FASCICULE DE BREVET EUROPEEN

(11) **EP 1 594 802 B1**
(45) Date de publication et mention de la délivrance du brevet: **05.11.2008**
(21) Numéro de dépôt: 04705814.4
(22) Date de dépôt: 28.01.2004
(51) Int. Cl.: C01B 31/02, B01J 4/00, B01J 12/02, C01B 3/26

(54) **PROCEDE ET INSTALLATION POUR LA FABRICATION DE NANOTUBES DE CARBONE**
VERFAHREN UND VORRICHTUNG ZUR HERSTELLUNG VON KOHLENSTOFFNANORÖHREN
METHOD AND INSTALLATION FOR MAKING CARBON NANOTUBES

(30) Priorité: 05.02.2003 EP 03075349
(43) Date de publication de la demande: 16.11.2005
(73) Titulaire: Université de Liège, 4031 Angleur (BE)
(72) Inventeur: PIRARD, Jean-Paul, B-4032 CHENEE (BE); BOSSUOT, Christophe, F-10130 Villeneuve (FR); KREIT, Patrick, B-4030 Grivegnée (BE)
(86) Numéro de dépôt international: PCT/EP2004/000952
(87) Numéro de publication internationale: WO 2004/069742

(56) Documents cités:
- EP-A- 0 451 323
- US-A1- 2001 048 908
- COLOMER J-F ET AL: "Large-scale synthesis of single-wall carbon nanotubes by catalytic chemical deposition (CCVD) method" CHEMICAL PHYSICS LETTERS, NORTH-HOLLAND, AMSTERDAM, NL, vol. 317, no. 1-2, 28 janvier 2000 (2000-01-28), pages 83-89, XP002227992 ISSN: 0009-2614
- PATENT ABSTRACTS OF JAPAN vol. 2003, no. 12, 5 décembre 2003 (2003-12-05) -& JP 2003 252613 A (TORAY IND INC), 10 septembre 2003 (2003-09-10)
- DATABASE WPI Section Ch, Week 200273 Derwent Publications Ltd., London, GB; Class E36, AN 2002-679265 XP002247751 & KR 2002 025 101 A (NANOTECH CO LTD), 3 avril 2002 (2002-04-03)

## Description

L'invention concerne la fabrication de nanotubes de carbone.

Les nanotubes de carbone sont bien connus en technique. Ils consistent, d'une manière générale, en filaments tubulaires extrêmement fins, constitués de carbone pur. Leur diamètre est de quelques nanomètres et leur longueur peut atteindre plusieurs centaines de nanomètres, voire avoisiner et même excéder le micron.

Il existe à l'heure actuelle trois principales méthodes de synthèses des nanotubes de carbone : la méthode d'ablation laser de carbone, l'émission d'un arc électrique sur une électrode de graphite et la décomposition chimique d'un hydrocarbure en phase vapeur, aussi appelée méthode CCVD (le sigle CCVD étant dérivé de l'appellation anglo-saxonne « Catalyst Chemical Vapor Deposition »).

La méthode de synthèse CCVD présente l'avantage d'être peu coûteuse et de produire des nanotubes avec des rendements en carbone satisfaisants. Selon cette méthode connue, on décompose un hydrocarbure (par exemple de l'éthylène) à l'état gazeux à haute température (de l'ordre de 1000 °C), en présence d'un catalyseur et on recueille du réacteur de synthèse les nanotubes de carbone (éventuellement accompagnés de suie et d'impuretés), le catalyseur, de l'hydrogène, la fraction d'hydrocarbure qui n'a pas été décomposée et éventuellement des hydrocarbures plus lourds (par exemple de l'éthane dans le cas où l'hydrocarbure soumis à la décomposition catalytique est de l'éthylène) et des composés odorants.

Dans la méthode de synthèse CCVD, il est indispensable d'éviter la présence d'air dans le réacteur de synthèse, pour éviter la formation de mélanges détonants avec l'hydrocarbure ou l'hydrogène produit. A cet effet, dans un mode de réalisation connu de la méthode CCVD, on met en oeuvre un réacteur tubulaire en quartz du type à lit fixe, au centre duquel on dispose un réceptacle en quartz contenant une charge de catalyseur (Chemical Physics Letters 317 (2000) pages 83 à 89 : « Large-scale synthesis of single-wall carbon nanotubes by catalytic chemical vapor deposition (CCVD) method » - J.-F. Colomer et al.). Ce mode d'exécution connu de la méthode CCVD implique les opérations suivantes dans l'ordre d'exécution :
- Mise de l'installation sous atmosphère inerte ;
- Ouverture du réacteur pour y enfourner un réceptacle contenant du catalyseur frais ;
- Mise de l'installation sous atmosphère inerte ;
- Alimentation du réacteur avec l'hydrocarbure dans un gaz inerte ;
- Mise de l'installation sous atmosphère inerte ;
- Défournement du réceptacle avec le catalyseur et le produit brut de la synthèse.

Ce mode d'exécution connu de la méthode CCVD est discontinu, ce qui constitue un inconvénient et nuit à la productivité du réacteur de synthèse. Il présente l'inconvénient supplémentaire d'enfourner le catalyseur frais sous gaz inerte à la température élevée de réaction alors que les catalyseurs utilisés se désactivent dans ces conditions. La désactivation du catalyseur est d'autant plus importante que le temps nécessaire pour purger l'installation et la mettre sous atmosphère inerte est long, après y avoir introduit le catalyseur frais.

Pour réduire l'importance de cette désactivation du catalyseur, il a été proposé d'augmenter la longueur du réacteur de synthèse, de telle sorte que celui-ci présente une partie d'amont logée dans un four et une partie d'aval dans l'air ambiant. L'hydrocarbure et son gaz porteur sont introduits dans la partie d'amont du réacteur et le catalyseur frais est introduit dans la partie d'aval du réacteur. De cette manière, le gaz réactionnel se refroidit dans la partie d'aval du réacteur et arrive à la température ambiante à la moitié du réacteur. Dans ce cas, on peut ouvrir le réacteur sous atmosphère réactionnelle sans risques exagérés pour défourner le réceptacle chargé de produit brut de synthèse et enfourner un autre réceptacle avec du catalyseur frais. Cette variante connue de la méthode CCVD présente l'avantage d'être plus rapide car les purges de gaz inerte ne sont plus nécessaires. Elle présente toutefois un danger non négligeable d'explosion, du fait que des quantités non négligeables d'hydrocarbure et d'hydrogène sont mises en contact avec l'air ambiant. De plus, on n'évite pas une désactivation partielle du catalyseur au contact des gaz de la réaction avant d'atteindre la température de réaction. En outre, du fait de l'inertie thermique de l'ensemble réceptacle en quartz/catalyseur, le catalyseur met un temps non négligeable à atteindre la température de réaction, après son introduction dans la partie chaude du réacteur, ce qui accroît davantage encore sa désactivation prématurée.

L'invention vise à remédier aux inconvénients précités des modes opératoires connus de la méthode de synthèse CCVD, en fournissant un procédé nouveau qui présente l'avantage de pouvoir être mis en oeuvre de manière continue, permet des rendements plus élevés et évite tout risque d'explosion.

En conséquence, l'invention concerne un procédé pour la fabrication de nanotubes de carbone par décomposition thermique d'au moins un hydrocarbure gazeux en présence d'un catalyseur solide dans un réacteur, **caractérisé en ce qu**'on introduit ***séparément et de manière continue,*** l'hydrocarbure et le catalyseur, ***dans une zone du réacteur où on réalise une température optimum pour la décomposition de l'hydrocarbure ;* ledit catalyseur étant introduit dans le réacteur** via un sas d'rentrée maintenu sous une atmosphère inerte et on soutire les nanotubes de carbone du réacteur via un sas de sortie que l'on balaie avec un courant d'un gaz inerte.

Le procédé selon l'invention est fondé sur la décomposition catalytique d'un hydrocarbure en carbone et en hydrogène. La synthèse est effectuée à haute température, en présence d'un catalyseur approprié pour que le carbone soit synthétisé à l'état de cristaux de graphite et présente la morphologie de nanotubes.

Les nanotubes de carbone obtenus au moyen du procédé selon l'invention sont des filaments tubulaires extrêmement fins, constitués de carbone graphitique pur et sont aussi ordonnés que des cristaux. Leurs diamètres externe et interne sont de quelques nanomètres (par exemple situés entre 4 à 50 nm pour le diamètre externe et entre 1 et 30 nm pour le diamètre interne) et leur longueur peut atteindre plusieurs centaines de nanomètres, voire plusieurs microns. Le filament est généralement formé d'une feuille de graphite, enroulée sur elle-même selon une spirale hélicoïdale. Selon les conditions opératoires mises en oeuvre au cours de la synthèse, on distingue les nanotubes monoparoi (dans lesquels la feuille spirale hélicoïdale formant la paroi du filament comporte une seule spire), et les nanotubes multiparois (dans lesquels la feuille spirale hélicoïdale comporte plusieurs spires, de sorte que le nanotube comprend alors plusieurs cylindres creux enfilés les uns dans les autres). Le diamètre interne des nanotubes dépend de divers facteurs, en particulier des conditions opératoires (température et pression), ainsi que du catalyseur et de l'hydrocarbure sélectionnés. Davantage d'informations sur les nanotubes de carbone sont accessibles dans la littérature technique, notamment dans l'article intitulé « Helical microtubes of graphitic carbon » de T.W. Ebbesen & P.M. Ajayan - Nature, Vol. 354, 7 novembre 1991, pages 56-58, ainsi que dans l'article intitulé « Large-scale synthesis of carbon nanotubes » - Nature, Vol. 358, 16 juillet 1992, pages 220-222.

L'hydrocarbure est avantageusement sélectionné parmi les hydrocarbures aliphatiques. Il peut comprendre un hydrocarbure saturé, un hydrocarbure insaturé, un mélange d'hydrocarbures saturés, un mélange d'hydrocarbures insaturés ou un mélange d'au moins un hydrocarbure saturé avec au moins un hydrocarbure insaturé. Le méthane, l'éthylène et l'acétylène conviennent bien.

Dans le procédé selon l'invention, l'hydrocarbure est mis en oeuvre à l'état gazeux et il est décomposé par voie thermique en présence d'un catalyseur. La température optimale de décomposition thermique dépend de divers paramètres, en particulier de l'hydrocarbure mis en oeuvre, du catalyseur sélectionné et de la pression mise en oeuvre dans le réacteur de synthèse. Le choix de la température est en outre conditionné par la morphologie souhaitée pour les nanotubes de carbone, en particulier par leurs dimensions et selon que l'on souhaite obtenir des nanotubes monoparoi ou des nanotubes multiparois. La température optimale doit dès lors être déterminée dans chaque cas particulier, par exemple au moyen d'un travail de routine au laboratoire. En général, des températures situées entre 500 et 1200 °C. Dans le cas où l'hydrocarbure utilisé est du méthane, on réalise de préférence une température de 900 à 1050 °C. Dans le cas où on utilise de l'éthylène, on choisit avantageusement une température de 600 à 800 °C.

Le catalyseur a pour fonction de catalyser la décomposition de l'hydrocarbure en carbone et en hydrogène, le carbone étant produit à l'état graphitique avec la morphologie de nanotubes. Le catalyseur n'est pas critique pour l'exécution du procédé selon l'invention, tout catalyseur normalement utilisé dans le procédé connu CCVD pouvant convenir.

La forme du réacteur n'est pas critique. Il doit être isolé du milieu ambiant, de manière à éviter que s'y introduisent des matières chimiques non contrôlées. Il est généralement étanche aux gaz. On utilise habituellement un réacteur tubulaire légèrement incliné sur l'horizontale. L'invention n'exclut toutefois pas l'usage d'une autre forme appropriée pour le réacteur. Le réacteur doit évidemment être réalisé en une matière susceptible de résister à la température, la pression et l'environnement chimique mis en oeuvre. On utilise avantageusement un réacteur en quartz.

Selon une première caractéristique du procédé selon l'invention, l'hydrocarbure est introduit de manière continue dans le réacteur. On peut utiliser à cet effet tout moyen approprié, normalement utilisé pour introduire un gaz de manière continue dans un réacteur chimique. Une lance d'injection constitue un moyen approprié pour introduire l'hydrocarbure de manière continue dans le réacteur.

L'hydrocarbure peut être introduit tel quel dans le réacteur. En variante, on peut aussi l'introduire par l'intermédiaire d'un gaz porteur inerte. L'argon, l'azote, l'hélium et l'hydrogène sont des exemples de gaz porteurs utilisables dans cette variante de l'invention.

Selon une deuxième caractéristique du procédé selon l'invention, le catalyseur est introduit de manière continue dans le réacteur. A cet effet, conformément à l'invention, on utilise un dispositif d'enfournement dont une partie au moins est maintenue sous une atmosphère inerte. Tout moyen connu approprié peut être utilisé pour maintenir le dispositif d'enfournement ou une partie de celui-ci sous atmosphère inerte. Un moyen approprié consiste à faire transiter le catalyseur dans un sas situé en amont du réacteur et à réaliser une atmosphère gazeuse inerte dans le sas (l'expression amont est définie par rapport au sens de circulation des matières premières et des produits de synthèse dans le réacteur). Pour ce faire, après introduction du catalyseur dans le sas, on le purge de l'air qu'il contient en le remplaçant par le gaz inerte. Cette purge a pour fonction d'éviter que de l'air pénètre dans le réacteur avec le catalyseur. L'atmosphère inerte est sélectionnée parmi les gaz qui ne sont pas susceptibles de réagir avec l'hydrocarbure dans le réacteur. L'argon, l'azote et l'hélium sont spécialement recommandés. Un moyen préféré pour réaliser l'atmosphère inerte dans le sas d'entrée consiste, selon l'invention, à soumettre celui-ci à un balayage avec le gaz inerte.

Selon une troisième caractéristique du procédé selon l'invention, on soutire les nanotubes de carbone du réacteur au moyen d'un dispositif de défournement dont une partie au moins est soumise à un balayage avec un courant d'un gaz inerte. Le balayage du dispositif de défournement avec le courant de gaz inerte a pour fonction d'entraîner les gaz issus de la réaction (hydrogène, excès d'hydrocarbure) hors du dispositif de défournement. Le gaz inerte utilisé pour le balayage doit par conséquent être inerte vis-à-vis du carbone, vis-à-vis de l'hydrogène et vis-à-vis de l'hydrocarbure mis en oeuvre. L'argon, l'azote et l'hélium sont spécialement recommandés. Tout moyen connu approprié peut être utilisé pour réaliser maintenir le dispositif de défournement ou une partie de celui-ci sous atmosphère inerte. Un moyen approprié consiste à faire transiter les nanotubes de carbone dans un sas situé en aval du réacteur et à soumettre ledit sas à un balayage avec le courant de gaz inerte (l'expression aval est définie par rapport au sens de circulation des matières premières et des produits de synthèse dans le réacteur).

Dans une forme de réalisation particulière du procédé selon l'invention, on extrait une partie au moins du gaz de réaction hors du réacteur. Cette forme de réalisation de l'invention permet une analyse du gaz de réaction pour suivre la bonne marche du procédé.

Dans le procédé selon l'invention, on recommande que le chauffage du réacteur soit réalisé de manière à éviter un chauffage substantiel de la partie au moins du dispositif d'enfournement, dans laquelle on réalise une atmosphère inerte. Dans le cas où ladite partie du dispositif d'enfournement comprend un sas, on isole celui-ci du chauffage du réacteur. On préfère éviter également un chauffage substantiel de la partie au moins du dispositif de défournement, dans laquelle on réalise une atmosphère inerte. Dans le cas où ladite partie du dispositif de défournement comprend un sas, on isole celui-ci du chauffage du réacteur.

Le procédé selon l'invention présente la particularité que le catalyseur et l'hydrocarbure sont isolés de l'air ambiant au moment de leur introduction dans le réacteur. Il présente la particularité supplémentaire que les nanotubes de carbone sont d'abord isolés de l'air ambiant au moment où on les sort du réacteur et sont ensuite plongés dans une atmosphère inerte avant d'être mis en contact avec l'air ambiant. Ces particularités du procédé selon l'invention garantissent la sécurité des opérateurs et du réacteur en supprimant tout risque d'explosion.

Le procédé selon l'invention présente l'avantage d'éviter une surchauffe prématurée du catalyseur, avant son entrée dans la zone du réacteur où s'effectue la synthèse, évitant de la sorte une baisse de son activité catalytique. Il permet en outre d'introduire le catalyseur et l'hydrocarbure à l'endroit le plus approprié du réacteur pour réaliser une synthèse optimum et obtenir un produit de qualité optimum avec des rendements optimum à la fois au point de vue énergétique et au point de vue de l'utilisation des matières premières.

Le procédé selon l'invention présente la particularité avantageuse d'être continu. Il n'impose pas, contrairement à la méthode connue de synthèse CCVD, un fonctionnement discontinu alternant des étapes d'enfournements des matières premières et des étapes de défournement des produits de la synthèse, séparées par des phases de mise sous atmosphère inerte du réacteur. Par comparaison avec les modes discontinus connus de synthèse des nanotubes de carbone, le procédé selon l'invention réalise une productivité maximum du réacteur, à un coût minimum.

L'invention concerne également une installation convenant pour la production continue de nanotubes de carbone au moyen du procédé selon l'invention. L'installation selon l'invention comprend un réacteur tubulaire incliné sur l'horizontale, un dispositif d'admission d'un réactif gazeux et un dispositif d'enfournement d'un produit pulvérulent qui débouchent au voisinage l'un de l'autre dans le même côté du réacteur, un dispositif de défournement d'une poudre hors du réacteur et un dispositif de chauffage du réacteur, le dispositif d'enfournement comprenant un sas isolé par deux vannes et muni de raccords à un circuit de gaz inerte et le dispositif de défournement comprenant un autre sas isolé par deux vannes et muni de raccords à un circuit de gaz inerte.

Dans l'installation selon l'invention, le réacteur tubulaire est conçu pour tourner autour de son axe longitudinal, à la manière des fours de cimenterie. Il doit être isolé du milieu ambiant, de manière à éviter que s'y introduisent des matières chimiques non contrôlées. Il est généralement étanche aux gaz.

Le dispositif de chauffage est habituellement situé à l'extérieur du réacteur et peut par exemple comprendre un foyer chauffé à l'électricité ou au moyen d'un combustible fossile. Il peut également comprendre une jaquette disposée autour du réacteur tubulaire et parcourue par un fluide chaud.

Dans une forme de réalisation avantageuse de l'installation selon l'invention, le dispositif de chauffage consiste en un four dans lequel est logé le réacteur tubulaire. Le chauffage du four peut être réalisé par tout moyen adéquat, par exemple par la combustion d'un combustible fossile (avantageusement du gaz naturel) ou par énergie électrique. Dans la forme de réalisation qui vient d'être décrite de l'installation selon l'invention, le réacteur tubulaire est par exemple réalisé en quartz ou en un autre matériau inerte et réfractaire, tel que de l'alumine ou de l'acier revêtu d'une couche protectrice en une matière réfractaire. Il est de préférence chemisé d'un cylindre métallique (par exemple en acier) destiné à renforcer sa résistance mécanique.

Les sas ont pour fonction de maintenir le réacteur tubulaire isolé de l'atmosphère extérieure, pendant l'introduction des matières premières et le soutirage des produits de la synthèse. Ils sont à cet effet muni de deux vannes d'isolement. L'une des vannes sert à isoler le sas du milieu extérieur et l'autre vanne est montée sur un conduit reliant le sas au réacteur. Les sas sont muni de raccords à un circuit de gaz inerte. Les raccords sont généralement au nombre de deux (bien qu'un nombre plus élevé de raccords soit possible) et ils sont situés de manière à permettre un balayage efficace du sas avec le gaz inerte.

Dans l'installation selon l'invention, le dispositif d'enfournement comprend normalement un distributeur du produit pulvérulent, conçu pour réguler le dédit du produit pulvérulent entrant dans le réacteur. Le distributeur peut par exemple être du type à vis d'archimède.

Lorsque l'installation selon l'invention est utilisée pour l'exploitation du procédé selon l'invention, le dispositif d'admission de gaz sert à introduire l'hydrocarbure dans le réacteur, le dispositif d'enfournement sert à introduire le catalyseur dans le réacteur, le dispositif de défournement sert à extraire les produits de la synthèse hors du réacteur, les circuits de gaz des sas sont des circuits de gaz inerte et le dispositif de chauffage est conçu pour réaliser une température de 500 à 1200 °C à l'intérieur du réacteur.

Dans une forme de réalisation préférée de l'installation selon l'invention, qui est bien adaptée à l'exécution du procédé selon l'invention, le réacteur est en communication avec un dispositif d'admission d'un gaz porteur de l'hydrocarbure.

Dans une autre forme de réalisation de l'installation selon l'invention, celle-ci comprend, dans la partie d'aval du réacteur, en amont du sas du dispositif de défournement, une conduite pour l'évacuation d'une partie au moins des gaz de la réaction. Cette conduite d'évacuation est avantageusement reliée à un analyseur de gaz. Cet analyseur de gaz n'est pas critique en soi. Il comprend avantageusement un chromatographe en phase gazeuse couplé à un spectromètre de masse.

L'installation selon l'invention est avantageusement pilotée par un ordinateur.

Les nanotubes de carbone obtenus au moyen du procédé selon l'invention trouvent diverses applications, notamment dans la fabrication de circuits électroniques, pour le renforcement de matériaux ou encore pour le stockage de gaz.

Des particularités et détails de l'invention sont exemplifiés dans la description suivante des dessins annexés.
La figure 1 montre schématiquement, en section axiale verticale, une forme de réalisation particulière de l'installation selon l'invention ;
La figure 2 est une vue en élévation d'un élément constructif de l'installation de la figure 1 ;
La figure 3 montre l'élément constructif de la figure 2 en section transversale selon le plan III-III de la figure 2 ;
La figure 4 montre à plus grande échelle un détail de la figure 3.

Dans ces figures, des mêmes numéros de référence désignent des éléments identiques.

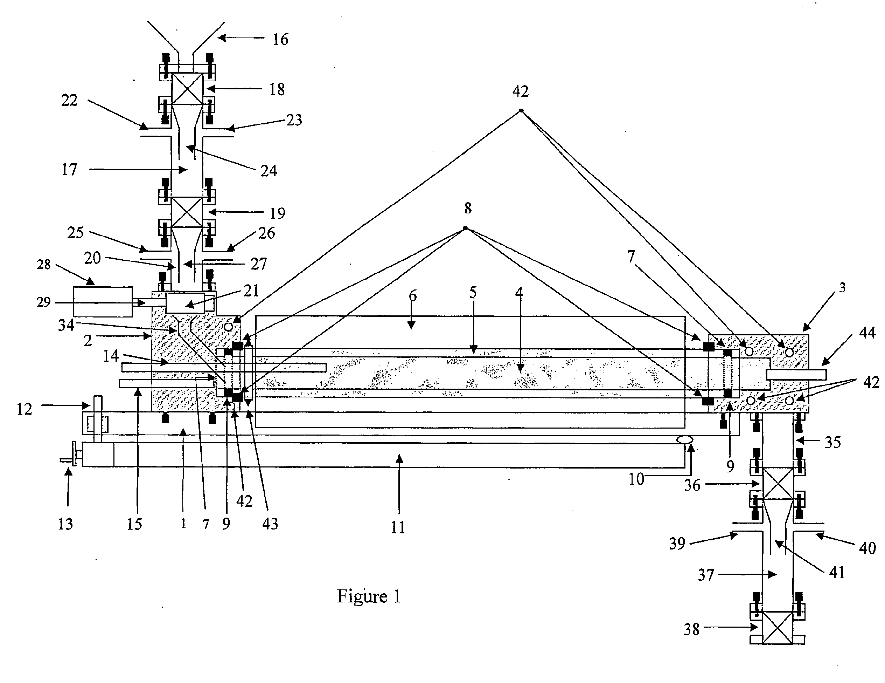

L'installation schématisée à la figure 1 comprend une poutre sensiblement horizontale 1 sur laquelle sont calés deux blocs métalliques 2 et 3 (par exemple en acier inoxydable). Les blocs 2 et 3 servent à supporter un réacteur tubulaire 4 en quartz, chemisé d'un cylindre 5 en acier inoxydable, à l'intérieur d'un four tubulaire 6. Le réacteur tubulaire 4 et sa chemise 5 sont supportés dans des cavités annulaires 7 des blocs 2 et 3, par des roulements 8. Des joints toriques 9 assurent l'étanchéité entre le réacteur 4 et la paroi des cavités 7.

La poutre 1 est articulée sur un galet 10 solidaire d'une poutre horizontale fixe 11. Une crémaillère 12 manoeuvrée par une manivelle 13, permet de régler l'inclinaison de la poutre 1 par rapport à l'horizontale.

Le bloc 2, situé en amont du réacteur 4, est traversé par un conduit 14 et un conduit 15 qui servent à introduire, dans le réacteur 4, respectivement un hydrocarbure à l'état gazeux et un gaz porteur.

Le bloc 2 supporte un ensemble d'éléments comprenant une trémie 16, un sas 17, deux vannes à boisseau 18 et 19, une enceinte 20 et un distributeur de poudre 21.

La trémie 16 est située sous un silo (non représenté) contenant un réactif solide pulvérulent. Elle débouche dans la vanne 18 formant l'extrémité d'amont du sas 17 dont l'extrémité d'aval comprend la vanne 19.

Le sas 17 se trouve en communication avec deux tubulures 22 et 23 destinées à le raccorder à un circuit de gaz inerte. Le sas 17 est tubulaire et contient un tube cylindrique 24 de plus petit diamètre, dont la fonction technique est d'éviter que la circulation du gaz inerte dans le sas 17 perturbe l'écoulement du réactif solide pulvérulent.

La vanne 19 débouche dans l'enceinte étanche 20 qui comporte deux tubulures 25 et 26 destinées à la raccorder à un circuit de gaz inerte. Le gaz inerte envoyé dans le sas 17 est de préférence le même que celui qui est envoyé dans l'enceinte 20.

L'enceinte 20 est tubulaire et contient un tube cylindrique 27, qui est similaire au tube cylindrique 24 du sas 17 et qui exerce la même fonction technique que lui.

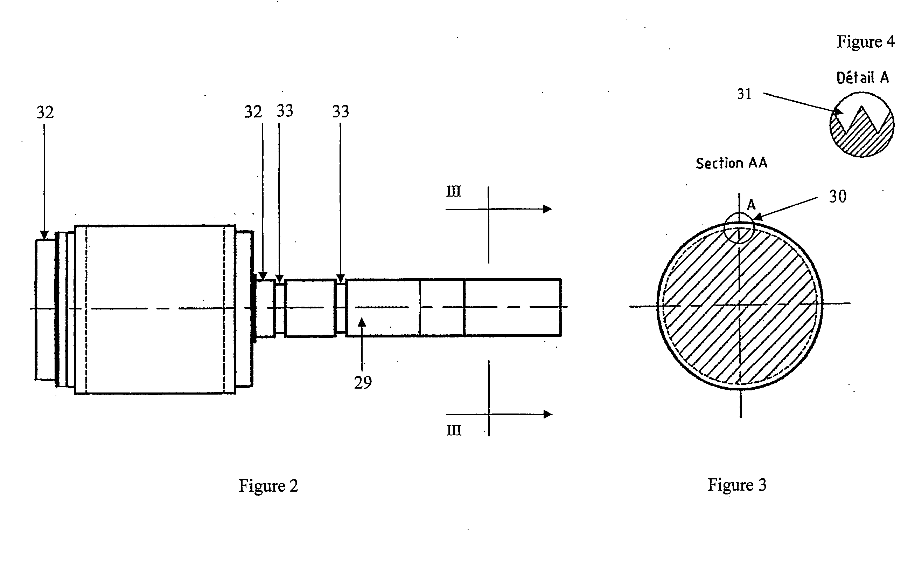

Le distributeur de poudre 21 est situé immédiatement sous l'enceinte 20 et est couplé à un moteur électrique 28. Le distributeur de poudre 21 (mieux représenté aux figures 2 et 3) comprend un arbre horizontal 29 dont une partie de la périphérie (désignée par la notation de référence 30 à la figure 3) a été fraisée pour y ménager une ou plusieurs auges 31 (figure 4). La longueur des auges 31 (dans le sens de l'axe de l'arbre 29) correspond sensiblement au diamètre de l'enceinte 20. Sous l'effet de la rotation de l'arbre 29, les compartiments 31 alternativement se remplissent de la poudre contenue dans l'enceinte 20 et déversent ensuite celle-ci, par gravité, dans un collecteur 34 ménagé dans le bloc 2.

L'arbre 29 comprend des butées 32 pour le calage de roulements (non représentés) et des rainures annulaires 33 destinées à contenir des joints toriques (non représentés) afin que la rotation de l'arbre 29 soit parfaitement étanche dans le bloc 2.

Le moteur 28 est du type à vitesse variable. Sa vitesse est réglée en fonction du débit recherché pour l'admission du produit pulvérulent dans le réacteur 4.

Le collecteur 34 traverse le bloc d'amont 2 et débouche dans le réacteur 4.

Le bloc d'extrémité 3 supporte un ensemble étanche d'éléments, comprenant un réservoir 35, une vanne 36 du type à guillotine, un sas 37 et une seconde vanne 38 du type à guillotine. Le sas 37 se trouve en communication avec deux tubulures 39 et 40 destinées à le raccorder à un circuit de gaz inerte.

Le réservoir 35 est ouvert à sa partie supérieure et se trouve en communication avec l'extrémité d'aval du réacteur 4 par l'intermédiaire d'une canalisation (non représentée) ménagée à travers le bloc 3. En manoeuvrant les vannes 36 et 38, les produits fabriqués dans le réacteur 4 sont ainsi défournés de l'installation. Pour éviter que la circulation du gaz inerte dans le sas 37 perturbe l'écoulement des produits déchargés du réacteur 4, on donne au sas 37 un profil tubulaire et on dispose, dans sa partie supérieure, un tube cylindrique 41 de plus petit diamètre.

Le bloc d'extrémité 3 est par ailleurs percé d'un conduit 44 débouchant dans la zone d'aval du réacteur 4. Ce conduit 44 est destiné à extraire une partie au moins des gaz du réacteur 4, pour les envoyer vers un analyseur de gaz non représenté. L'analyseur de gaz n'est pas critique. Il peut par exemple comprendre un chromatographe en phase gazeuse couplé à un spectromètre de masse.

Les blocs d'amont 2 et d'aval 3 sont parcourus chacun par un circuit interne de canalisations 42, destinées à la circulation d'un fluide de refroidissement, généralement de l'eau.

Une couronne dentée 43 est calée sur la chemise métallique 5 du réacteur 4 et couplée mécaniquement à l'arbre d'un moteur électrique (non représenté), de manière à soumettre le réacteur 4 à une rotation lente et régulière.

Pour fabriquer des nanotubes de carbone au moyen de l'installation représentée aux figures, on chauffe le four 6 de manière adéquate pour réaliser dans le réacteur 4 la température de réaction qui convient pour la décomposition catalytique de l'hydrocarbure. L'eau de refroidissement circulant dans les canalisations 42 garantit le maintient des blocs d'amont 2 et d'aval 3 à une température compatible avec leur bonne tenue mécanique.

Les sas 17 et 37 et l'enceinte 20 sont par ailleurs soumis à un balayage permanent avec un gaz inerte, par exemple de l'azote, par l'intermédiaire des tubulures 22 et 23, 39 et 40, 25 et 26 respectivement.

On déverse un catalyseur en poudre dans la trémie 16 et on ouvre la vanne 18, la vanne 19 étant obturée. Après remplissage du sas 17, on obture la vanne 18 et on ouvre la vanne 19 pour transférer le catalyseur du sas 17 dans l'enceinte 20 via le conduit cylindrique 27. Après avoir obturé la vanne 18 et pendant que le sas 17 se vide de la poudre catalytique qu'il contient, on introduit une nouvelle charge de catalyseur dans la trémie 16. Dès que le sas 17 est vide, on obture la vanne 19, on rouvre la vanne 18 et on répète le cycle des opérations qui viennent d'être décrites.

Le catalyseur en poudre contenu dans l'enceinte 20 s'écoule par gravité et de manière continue vers le réacteur 4 à travers le collecteur 34. Son débit est contrôlé par le distributeur 21. Si l'écoulement par gravité est difficile, une vis d'Archimède ou un dispositif vibrant (non représentée) peut être ajoutée pour assurer un bon transport du catalyseur entre le distributeur et le réacteur. Le réacteur 4 étant légèrement incliné de l'amont (bloc 2) vers l'aval (bloc 3) et étant par ailleurs soumis à une rotation lente et continue autour de son axe longitudinal, le catalyseur en poudre s'y écoule progressivement vers le bloc 3.

Par ailleurs, on introduit de manière continue dans le réacteur 4, d'une part un hydrocarbure (par exemple du méthane) via le conduit 14 et, d'autre part, un gaz porteur (par exemple de l'argon, de l'azote, de l'hélium ou de l'hydrogène) via le conduit 15. Dans le four 4, on réalise une température d'environ 600 à 800°C, de manière à décomposer l'hydrocarbure en carbone et hydrogène. Au contact du catalyseur, le carbone cristallise en formant des nanotubes de graphite. Les produits de la réaction s'écoulent vers l'extrémité d'aval du réacteur 4 et passent dans le réservoir 35. Si un phénomène de collage intervient et gêne l'écoulement des produits dans le réacteur, un racloir (non représenté) peut être utilisé pour faciliter l'écoulement continu des produits. Si l'écoulement par gravité ne se fait pas facilement dans le dispositif de soutirage, un extracteur (non représenté) peut être utilisé pour faciliter le transport entre le réacteur et le sas 37. Le sas 37 se trouvant sous atmosphère inerte d'azote, on ouvre sa vanne 36 pour y transférer les produits du réservoir 35. Le balayage du sas 37 avec le courant de gaz inerte (par l'intermédiaire des tubulures 39 et 40) a pour effet d'éliminer sensiblement la totalité de l'hydrogène et des hydrocarbures contenus dans le sas 37.

On ouvre la vanne 38 pour recueillir les nanotubes de carbone. On recueille par ailleurs le courant de gaz sortant de la conduite 44 et on le transfert vers un analyseur, non représenté, par exemple un chromatographe en phase gazeuse couplé à un spectromètre de masse.

Pendant l'exploitation de l'installation représentée aux figures, on peut déplacer axialement les conduits 14 et 15 d'admission de gaz, de manière à délivrer ceux-ci dans la zone du four où règne la température la plus appropriée pour la synthèse des nanotubes de carbone.

L'intérêt de l'invention va apparaître au cours de la description des exemples suivants.

Première série d'exemples (conformes à l'invention).

Les exemples 1 à 3 dont la description suit ont trait à des essais de synthèse de nanotubes de carbone, qui ont été effectués conformément au procédé selon l'invention, dans une installation similaire à celle représentée aux figures 1 à 4.

### Exemple 1.

Dans cet exemple, on a disposé dans le réacteur un lit de 0,09 g de catalyseur par cm de longueur du réacteur tubulaire et on a soumis le réacteur à une rotation continue de 2 tours/min. On a alimenté le réacteur avec un catalyseur en poudre et l'hydrocarbure choisi a consisté en de l'éthylène dilué dans un gaz porteur à raison de 0,33 mole/l.

On a utilisé un débit de catalyseur de 0,006 g/s et un débit de gaz (gaz porteur chargé de l'éthylène) de 3 Nl/min.

On a obtenu une production de 32 g de nanotubes de carbone par heure, avec un rendement de 4,5 g de carbone par g de catalyseur.

### Exemple 2.

On a répété l'essai de l'exemple 1, dans les conditions suivantes :
Epaisseur du lit de catalyseur : 0,22 g/cm ;
Vitesse de rotation du réacteur : 2 tours/min ;
Titre molaire de l'éthylène dans le gaz porteur : 0,50 ;
Débit de catalyseur : 0,015 g/s ;
Débit de gaz : 3 Nl/min.

On a obtenu les résultats suivants :
Production : 48 g/h ;
Rendement : 4,9 g de carbone par g de catalyseur.

### Exemple 3.

On a répété l'essai de l'exemple 1, dans les conditions suivantes :
Epaisseur du lit de catalyseur : 0,04 g/cm ;
Vitesse de rotation du réacteur : 2 tours/min ;
Titre molaire de l'éthylène dans le gaz porteur : 0,33 ;
Débit de catalyseur : 0,003 g/s ;
Débit de gaz : 3 Nl/min.

On a obtenu les résultats suivants :
Production : 32 g/h ;
Rendement : 3,8 g de carbone par g de catalyseur.

Seconde série d'exemples (non conformes à l'invention).

Les exemples 4 à 6 dont la description suit ont été effectués conformément au mode discontinu connu du procédé CCVD. Dans ces exemples, on a utilisé le même catalyseur que dans la première série d'exemples 1 à 3.

### Exemple 4.

Dans cet exemple, on a réalisé dans un réacteur tubulaire horizontal un lit permanent de catalyseur de 2,0 g réparti sur une longueur de 20 cm.

L'hydrocarbure choisi a consisté en de l'éthylène dilué dans un gaz porteur à raison de 0,33 mole/l, comme dans la première série d'exemples. On a fait circuler ce gaz dans le réacteur pendant 20 minutes, au débit de 3 Nl/min.

On a obtenu une production de 6,8 g de nanotubes de carbone par heure, avec un rendement de 1,7 g de carbone par g de catalyseur.

### Exemple 5.

On a répété l'essai de l'exemple 4, dans les conditions suivantes :
Longueur du lit permanent de catalyseur : 20 cm ;
Masse du lit permanent de catalyseur : 0,8 g ;
Titre molaire de l'éthylène dans le gaz porteur : 0,33 ;
Débit de gaz : 3 Nl/min ;
Durée de l'essai discontinu : 20 min.

On a obtenu les résultats suivants :
Production : 3,4 g/h ;
Rendement : 2,1 g de carbone par g de catalyseur.

### Exemple 6.

On a répété l'essai de l'exemple 4, dans les conditions suivantes :
Longueur du lit permanent de catalyseur : 20 cm ;
Masse du lit permanent de catalyseur : 1,6 g ;
Titre molaire de l'éthylène dans le gaz porteur : 0,33 ;
Débit de gaz : 3 Nl/min ;
Durée de l'essai discontinu : 20 min.

On a obtenu les résultats suivants :
Production : 7,4 g/h ;
Rendement : 2,3 g de carbone par g de catalyseur.

Une comparaison des résultats des exemples 1 à 3 (conformes à l'invention) avec ceux des exemples 4 à 6 (conforme au procédé discontinu antérieur à l'invention) fait immédiatement apparaître l'avantage de l'invention en ce qui concerne la productivité et le rendement de la synthèse des nanotubes de carbone.

## Revendications

1. Procédé pour la fabrication de nanotubes de carbone par décomposition thermique d'au moins un hydrocarbure gazeux en présence d'un catalyseur solide dans un réacteur, **caractérisé en ce qu'**on introduit ***séparément et de manière continue,*** l'hydrocarbure et le catalyseur, dans une zone du ***réacteur où on réalise une température optimum pour la décomposition* de *l'hydrocarbure ;* ledit catalyseur étant introduit dans le réacteur** via un sas d'entrée maintenu sous une atmosphère inerte et on soutire les nanotubes de carbone du réacteur via un sas de sortie que l'on balaie avec un courant d'un gaz inerte.

2. procédé selon la revendication 1, **caractérisé en ce qu'**on met en oeuvre un réacteur tubulaire qui est incliné sur l'horizontale entre le sas d'entrée et le sas de sortie et on soumet ledit réacteur tubulaire à une rotation continue.

3. Procédé selon selon l'une quelconque des revendications 1 à 2, **caractérisé en ce qu'**on sélectionne la température précitée entre 500 à 1200 °C.

4. Procédé selon selon l'une quelconque des revendication 1 à 3, **caractérisé en ce qu'**on soumet le réacteur à un chauffage dont on isole les sas d'entrée et de sortie.

5. Procédé selon l'une quelconque des revendications 1 à 4, **caractérisé en ce qu'**on introduit en outre de l'hydrogène et/ou un gaz inerte dans le réacteur.

6. Procédé selon l'une quelconque des revendications 1 à 5, **caractérisé en ce que** le gaz inerte est sélectionné parmi l'argon, l'azote et l'hélium.

7. Procédé selon l'une quelconque des revendications 1 à 6, **caractérisé en ce qu'**on sélectionne l'hydrocarbure parmi le méthane, l'éthylène et l'acétylène.

8. Installation pour la production de nanotubes de carbone au moyen du procédé conforme à l'une quelconque des revendications 1 à 7, comprenant un réacteur tubulaire (4) incliné sur l'horizontale, un dispositif d'admission d'un réactif gazeux (14) et un dispositif d'enfournement (16, 17, 21) d'un produit pulvérulent qui débouchent au voisinage l'un de l'autre dans le même côté du réacteur, un dispositif de défournement (35, 36, 39, 40) d'une poudre hors du réacteur et un dispositif de chauffage (6) du réacteur, le dispositif d'enfournement comprenant un sas (17) isolé par deux vannes (18, 19) et muni de raccords (22, 23) à un circuit de gaz inerte et le dispositif de défournement comprenant un autre sas (37) isolé par deux vannes (36, 38) et muni de raccords (39, 40) à un circuit de gaz inerte.

9. Installation selon la revendication 8, **caractérisée en ce que** le dispositif d'enfournement (16, 17, 20, 21, 34) comprend un distributeur (21) du produit pulvérulent.

## Claims

1. Method for the manufacture of carbon nanotubes by thermal decomposition of at least one gaseous hydrocarbon in the presence of a solid catalyst in a reactor, **characterised in that** the hydrocarbon and the catalyst are introduced separately and continuously, in an area of the reactor where an optimum temperature is produced for the decomposition of the hydrocarbon; the said catalyst being introduced into the reactor via an inlet airlock maintained under an inert atmosphere and the carbon nanotubes are withdrawn from the reactor via an outlet airlock that is scavenged with a flow of inert gas.

2. Method according to claim 1, **characterised in that** a tubular reactor is used that is inclined to the horizontal between the inlet airlock and the outlet airlock and the said tubular reactor is subjected to a continuous rotation.

3. Method according to either one of claims 1 to 2, **characterised in that** the aforementioned temperature is selected between 500° and 1200°C.

4. Method according to any one of claims 1 to 3, **characterised in that** the reactor is subjected to a heating from which the inlet and outlet airlocks are isolated.

5. Method according to any one of claims 1 to 4, **characterised in that** hydrogen and/or an inert gas is also introduced into the reactor.

6. Method according to any one of claims 1 to 5, **characterised in that** the inert gas is selected from argon, nitrogen and helium.

7. Method according to any one of claims 1 to 6, **characterised in that** the hydrocarbon is selected from methane, ethylene and acetylene.

8. Installation for the production of carbon nanotubes by means of the method according to any one of claims 1 to 7, comprising a tubular reactor (4) inclined to the horizontal, a device for admitting a gaseous reagent (14) and a device (16, 17, 21) for loading a powdery product that open out in the vicinity of each other in the same side of the reactor, a device (35, 36, 39, 40) for unloading a powder out of the reactor and a device (6) for heating the reactor, the loading device comprising an airlock (17) isolated by two valves (18, 19) and provided with connections (22, 23) to an inert gas circuit and the unloading device comprising another airlock (37) isolated by two valves (36, 38) and provided with connections (39, 40) to an inert gas circuit.

9. Installation according to claim 8, **characterised in that** the loading device (16, 17, 20, 21, 34) comprises a dispenser (21) for powdery product.

## Patentansprüche

1. Verfahren zur Herstellung von Kohlenstoffnanoröhren durch thermische Zersetzung mindestens eines gasförmigen Kohlenwasserstoffs in Gegenwart eines festen Katalysators in einem Reaktor, **dadurch gekennzeichnet, daß** man den Kohlenwasserstoff und den Katalysator separat und kontinuierlich in eine Zone des Reaktors einträgt, in der man eine Optimaltemperatur für die Zersetzung des Kohlenwasserstoffs realisiert, wobei der Katalysator über eine unter Inertatmosphäre gehaltene Eingangsschleuse in den Reaktor eingetragen wird, und die Kohlenstoffnanoröhren über eine mit einem Inertgasstrom gespülte Ausgangsschleuse aus dem Reaktor austrägt.

2. Verfahren nach Anspruch 1, **dadurch gekennzeichnet, daß** man einen zwischen der Eingangsschleuse und der Ausgangsschleuse gegenüber der Horizontalen geneigten Rohrreaktor verwendet und den Rohrreaktor einer kontinuierlichen Rotation unterwirft.

3. Verfahren nach einem der Ansprüche 1 bis 2, **dadurch gekennzeichnet, daß** man die Temperatur zwischen 500 und 1200°C wählt.

4. Verfahren nach einem der Ansprüche 1 bis 3, **dadurch gekennzeichnet, daß** man den Reaktor einer Erhitzung unterwirft, von der die Eingangs- und Ausgangsschleuse isoliert sind.

5. Verfahren nach einem der Ansprüche 1 bis 4, **dadurch gekennzeichnet, daß** man außerdem Wasserstoff und/oder ein Inertgas in den Reaktor einträgt.

6. Verfahren nach einem der Ansprüche 1 bis 5, **dadurch gekennzeichnet, daß** man das Inertgas unter Argon, Stickstoff und Helium auswählt.

7. Verfahren nach einem der Ansprüche 1 bis 6, **dadurch gekennzeichnet, daß** man den Kohlenwasserstoff unter Methan, Ethylen und Acetylen auswählt.

8. Anlage zur Herstellung von Kohlenstoffnanoröhren nach dem Verfahren gemäß einem der Ansprüche 1 bis 7, umfassend einen gegenüber der Horizontalen geneigten Rohrreaktor (4), eine Vorrichtung zum Einlassen eines gasförmigen Reagens (14) und eine Vorrichtung (16, 17, 21) zum Eintragen eines Pulvers, die in kurzer Entfernung zueinander in die gleiche Seite des Reaktors münden, eine Vorrichtung (35, 36, 39, 40) zum Austragen eines Pulvers aus dem Reaktor und eine Vorrichtung (6) zum Erhitzen des Reaktors, wobei die Eintragsvorrichtung eine durch zwei Ventile (18, 19) isolierte und mit Verbindungen (22, 23) zu einem Inertgaskreislauf versehene Schleuse (17) umfaßt und die Austragsvorrichtung eine andere, durch zwei Ventile (36, 38) isolierte und mit Verbindungen (39, 40) zu einem Inertgaskreislauf versehene Schleuse (37) umfaßt.

9. Anlage nach Anspruch 8, **dadurch gekennzeichnet, daß** die Eintragsvorrichtung (16, 17, 20, 21, 34) einen Verteiler (21) für das pulverförmige Produkt umfaßt.
